# FASCICULE DE BREVET EUROPEEN

(11) **EP 0 829 129 B1**
(45) Date de publication et mention de la délivrance du brevet: **23.12.1998**
(21) Numéro de dépôt: 96920881.8
(22) Date de dépôt: 31.05.1996
(51) Int. Cl.: H02K 21/24, H02K 37/12, H02K 26/00

(54) **ACTIONNEUR ELECTROMAGNETIQUE PRESENTANT AU MOINS DEUX POSITIONS STABLES PAR VERROUILLAGE MAGNETIQUE**
ELEKTROMAGNETISCHER BETÄTIGER MIT MINDENSTENS ZWEI STABILEN STELLUNGEN DURCH MAGNETISCHE VERRIEGELUNG
ELECTROMAGNETIC ACTUATOR MAGNETICALLY LOCKED INTO TWO OR MORE STABLE POSITIONS

(30) Priorité: 31.05.1995 FR 9506490
(43) Date de publication de la demande: 18.03.1998
(73) Titulaire: Sonceboz S.A., 2605 Sonceboz (CH)
(72) Inventeur: GANDEL, Pierre, F-25600 Montfocon (FR)
(74) Mandataire: Breese, Pierre
(86) Numéro de dépôt international: FR9600824
(87) Numéro de publication internationale: WO9638904

(56) Documents cités:
- EP-A- 0 175 903
- WO-A-90/16107
- FR-A- 2 670 629
- US-A- 5 313 127

## Description

La présente invention concerne un actionneur électromagnétique destiné à l'entraînement de dispositifs tels que des vannes ou des interrupteurs, présentant plusieurs états possibles, commandés par le positionnement d'un organe rotatif. Le déplacement entre deux positions stables consécutives constitue une transition rapide, obtenue par l'application d'un courant dans une paire de bobine au moins. L'entraînement de tels dispositifs par des moteurs électriques nécessite habituellement l'emploi de mécanismes de verrouillage pour garantir le positionnement au repos dans l'une des positions recherchées après un déplacement en rotation, et éviter les déplacements intempestifs en l'absence de signaux de commande. On connaît dans l'état de la technique des actionneurs comportant un rotor disposé dans un entrefer d'une structure statorique formé par un premier circuit magnétique comportant quatre épanouissements polaires munis chacun d'une bobine d'excitation. Le rotor présente une partie mince aimantée constituée de deux paires de pôles minces aimantés transversalement en sens opposé. De tels actionneurs sont destinés en particulier à la commande de vanne ou d'interrupteurs. Ces actionneurs, décrit par exemple dans le brevet WO-A-9016107 ou dans le brevet FR-A-2670629, présentent la particularité de posséder une grande zone dans laquelle la force est constante. De ce fait, il est possible de réaliser des actionneurs ayant une très grande reproductibilité et une très grande précision angulaire par asservissement.

Pour présenter des positions stables en l'absence de courant, les actionneurs selon l'état de la technique comportent habituellement une roue à cliquet pour verrouiller la position de l'actionneur après un déplacement. Les pièces mécaniques mises en oeuvre pour le verrouillage sont la cause de bruit et d'usure. De plus, elles entraînent une augmentation du coût de fabrication et d'assemblage de tels actionneurs.

L'objet de la présente invention est de réaliser un actionneur comportant au moins deux positions stables, avec un fort couple de verrouillage avec ou sans courant, ne nécessitant pas de pièces mécaniques de verrouillage.

La présente invention concerne à cet effet un actionneur électromagnétique présentant quatre positions stables en l'absence de courant, pour l'entraînement d'un dispositif tel qu'une vanne ou un interrupteur, l'actionneur comportant un aimant mince mobile en rotation, présentant deux paires de pôles magnétiques aimantés transversalement en sens alternés, et une structure statorique comportant quatre épanouissements polaires de longueur développée P munis chacun d'une bobine d'excitation, deux pôles consécutifs de l'aimant mince étant séparés par une distance d. L'aimant mince est mobile dans un entrefer d'une dimension E, les rapports de dimension P/E et P/d étant chacun supérieurs à 8.

Un tel actionneur présente un couple de verrouillage de près de 30% du couple moteur, lorsque le plan diamétral séparant les deux aimants est dans l'un des plans passant entre deux épanouissements polaires.

Un tel actionneur peut être réalisé sous deux variantes : une première variante dans laquelle la partie mobile est en forme de disque, et une seconde variante dans laquelle la partie mobile est en forme de tube.

Selon la première variante, la partie mobile est constituée par une culasse à section circulaire solidaire d'un aimant mince en forme de disque présentant deux secteurs complémentaires s'étendant sur environ 180 ° aimantés en suivant deux directions axiales opposées, les épanouissements polaires de la partie statorique disposés en regard de l'aimant mobile présentant une forme annulaire s'étendant sur environ 90°.

Avantageusement, la surface semi-annulaire des épanouissements polaires de partie statorique est prolongée par un pied de section plus réduite, la bobine d'excitation entourant ledit pied.

De préférence, les épanouissements sont solidaires d'une pièce de fermeture de flux magnétique en forme de disque.

Selon une forme particulière de mise en oeuvre, la structure statorique est constituée par une première pièce ferromagnétique présentant deux épanouissements polaires et une deuxième pièce ferromagnétique présentant deux épanouissements polaires, les deux pièces statoriques étant disposées de part et d'autre de l'aimant mince en forme de disque, les plans passant par la surface supérieure des épanouissements étant écartés d'une distance d, les deux pièces statoriques étant décalées de 90°.

Selon une deuxième variante de réalisation, la partie statorique est formée par une pièce intérieure de forme cylindrique en un matériau ferromagnétique, présentant deux encoches latérales diamétralement opposées pour le positionnement d'une bobine électrique et par une pièce périphérique de forme tubulaire présentant deux rainures longitudinales intérieures pour le positionnement d'une seconde bobine électrique, les plans médians des deux bobines étant perpendiculaires.

Selon une première forme de mise en oeuvre, la partie mobile est constituée par une culasse de forme cylindrique et par un aimant mince en forme de cylindre présentant deux secteurs complémentaires en forme de tuile s'étendant sur environ 180° aimantés suivant deux directions radiales opposées.

Avantageusement, la partie statorique est formée par une pièce intérieure de forme cylindrique en un matériau ferromagnétique, présentant deux encoches latérales diamétralement opposées pour le positionnement d'une bobine électrique et par une pièce périphérique de forme tubulaire présentant deux rainures longitudinales intérieures pour le positionnement d'une seconde bobine électrique, les plans médians des deux bobines étant perpendiculaires.

Selon une deuxième forme de mise en oeuvre, la partie statorique est formée par une pièce intérieure de forme cylindrique en un matériau ferromagnétique et par une pièce périphérique de forme tubulaire présentant quatre rainures longitudinales intérieures pour le positionnement de quatre bobines électriques, les plans médians des deux bobines étant décalés angulairement de 90°.

La présente invention sera mieux comprise dans la description qui suit, ou s'appuyant sur les dessins où :
- la figure 1 représente une vue éclatée d'un actionneur selon la première variante,
- la figure 2 représente une vue de dessus des épanouissements polaires,
- la figure 3 représente la courbe position-couple de l'actionneur
- la figure 4 représente une vue en coupe médiane de l'actionneur,
- la figure 5 représente une vue éclatée d'une deuxième forme de réalisation,
- la figure 6 représente une vue éclatée d'une troisième forme de réalisation,
- la figure 7 représente une vue en coupe transversale d'une deuxième variante de réalisation de l'actionneur,
- la figure 8 représente une vue en coupe transversale d'une autre forme de réalisation de l'actionneur.

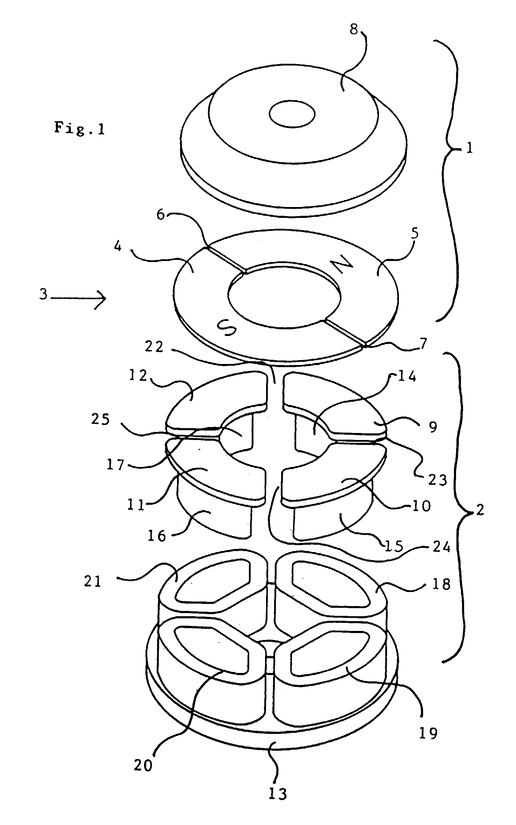

La figure 1 représente une vue éclatée d'un actionneur selon la première variante de réalisation.

L'actionneur est constitué par une partie mobile (1) et une partie fixe (2).

La partie mobile (1) comporte un aimant mince (3) formé de deux paires de pôles (4, 5) aimantés axialement en sens opposés, et s'étendant chacune sur environ 180°. Les transitions (6, 7) entre deux paires de pôles (4, 5) sont inférieures à 1°. L'aimant (3) est réalisé en accolant deux demi-aimants ou de préférence en magnétisant deux secteurs d'un disque mince en un matériau tel que du fer-nickel, ou tout autre matériau employé pour la réalisation d'aimants permanents.

La partie mobile (1) comporte en outre une culasse (8) en un matériau ferromagnétique. l'aimant (3) est collé contre cette culasse (8).

La partie fixe est constituée par quatre épanouissements polaires (9 à 12) formés par des secteurs annulaires s'étendant sur près de 90° et reliés par des pieds (14 à 17) à une plaque de fermeture de flux (13). Des bobines électriques (18 à 21) entourent les pieds (14 à 17) pour exciter les épanouissements polaires (9 à 12). Deux épanouissements polaires sont séparés par un espace libre (22 à 25) dont la longueur, mesurée sur le périmètre moyen, est d.

Le fonctionnement de l'actionneur est le suivant :

En position de repos n° 1, la première paire de pôles d'aimant (4) présentant le pôle SUD vers le haut, est alignée avec les deux épanouissements (10, 11), l'autre paire de pôle d'aimant (5) étant alignée avec les deux autres épanouissements (9, 12) . Les transitions (6, 7) sont alignées avec les espaces respectivement (25), (23) diamétralement opposés.

Cette première position de repos est stable en l'absence de courant. Il est nécessaire d'appliquer un couple significatif pour déplacer la partie mobile.

Dans ce qui suit, on considérera que la circulation d'un courant positif (respectivement négatif) dans l'une des bobines tend à faire se déplacer le pôle Nord (respectivement le pôle SUD) de l'aimant jusqu'à ce que le potentiel des pôles magnétiques s'ajoute à celui de l'aimant.

On sort de la position de repos n° 1 en alimentant positivement les deux bobines consécutives (20, 21) et négativement les deux bobines consécutives (18, 19). La partie mobile se déplace alors de 90° et vient se placer dans une position de repos n° 2. Cette position correspond à l'alignement de la première paire de pôles d'aimant (4) présentant le pôle SUD vers le haut avec les deux épanouissements (11, 12), l'autre paire de pôle d'aimant (5) étant alignée avec les deux autres épanouissements (9, 10). Les transitions (6, 7) sont alignées avec les espaces respectivement (22), (24) diamétralement opposés.

Pour revenir de la position de repos n° 2 à la position de repos n° 1, il convient d'alimenter positivement les deux bobines (19, 20) et d'alimenter négativement les deux bobines (18, 21).

Si l'actionneur est destiné à faire basculer un organe entre deux positions décalées de 90°, comme la commande d'une vanne, les deux bobines diamétralement opposées (18, 20) sont toujours alimentées de la même manière. Le basculement de l'une des positions à l'autre position s'effectue en inversant le sens d'alimentation des deux autres bobines diamétralement opposées (19, 21).

Il est également possible, par une combinaison d'alimentation ad-hoc, de déplacer l'organe mobile (1) dans les autres positions de repos décalées de 90° par rapport aux positions de repos n° 1 et n° 2.

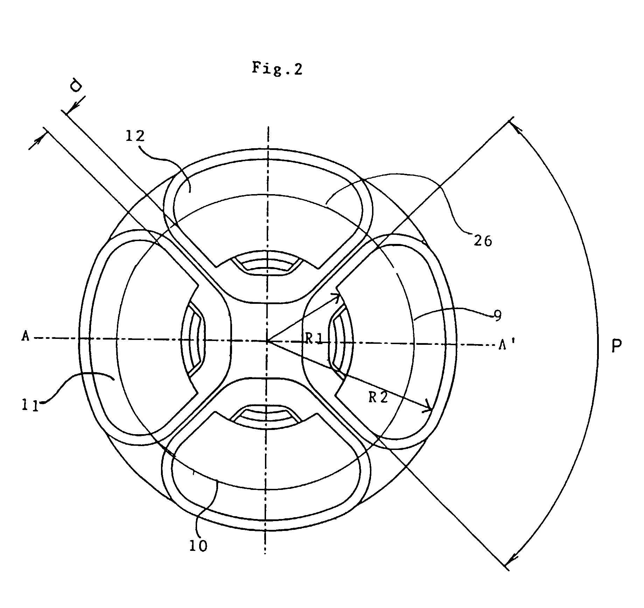

La figure 2 représente une vue de dessus des épanouissements polaires.

Les caractéristiques dimensionnelles sont déterminées par la mesure sur le périmètre moyen (26). Le périmètre moyen (26) est le cercle dont le rayon correspond à la moyenne entre le rayon R1 du bord intérieur des épanouissements (9 à 12) et le rayon R2 du bord extérieur des épanouissements (9 à 12).

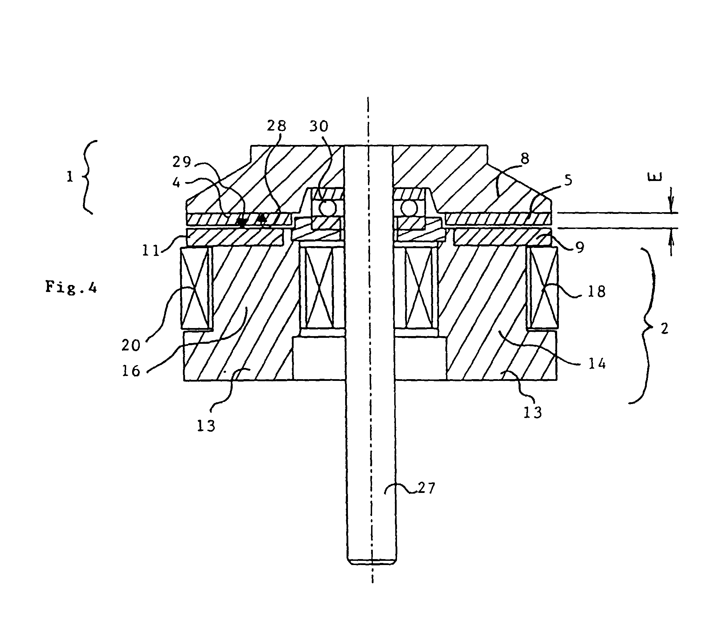

On désignera par :
- P la largeur des épanouissements polaires (9 à 12)
- E l'entrefer axial entre le sommet des épanouissements polaires (9 à 12) et la surface inférieure de la culasse mobile (voir figure 4)
- d la distance entre deux épanouissements polaires (9 à 12) consécutifs.

Une caractéristique nécessaire pour obtenir l'effet technique objet de l'invention, à savoir l'optimisation en amplitude et en raideur du couple de verrouillage sans courant, réside dans les choix des rapports dimensionnels.

Le rapport P/E sera choisi grand, typiquement supérieur à 8. La distance d sera choisie voisine de P/8.

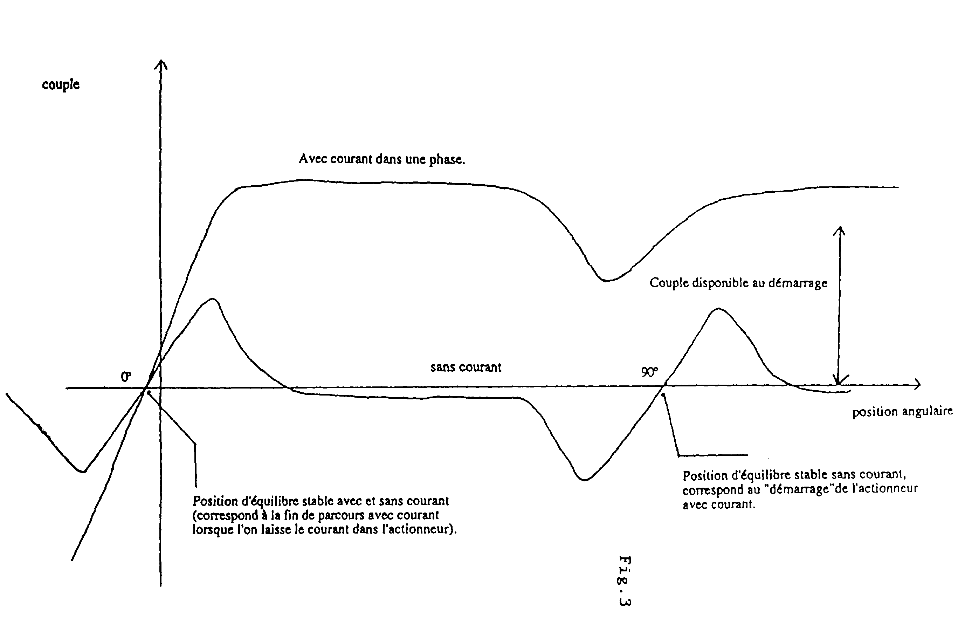

Dans ce cas, l'actionneur présente un maximum de couple de verrouillage sans courant (typiquement 30 % du couple nominal avec courant) sur les quatre positions stables, et une raideur maximale de cette loi de couple sans courant (typiquement 10 mNm/degrés), tout en conservant un couple de démarrage suffisant pour l'accélération du rotor et une raideur avec courant en fin de course suffisante pour le freinage du rotor. La figure 3 représente un exemple typique de la fin de couple avec ou sans courant en fonction de la position.

La figure 4 représente une vue en coupe médiane de l'actionneur selon un plan A-A'.

La partie mobile (1) est solidaire d'un axe (27) traversant la partie statorique (2). L'entrefer E séparant la surface inférieure (28) de la culasse (2) et la surface supérieure (29) des épanouissements polaires (9 à 12) est déterminé à l'aide d'une butée à billes (30). Le positionnement de la partie mobile (1) et de la partie statorique (2) est assuré par l'attraction magnétique des aimants permanents, ce qui évite l'emploi de moyens mécaniques complémentaires pour assurer le blocage de l'axe par rapport à la structure statorique (2). L'actionneur présente donc dans l'exemple décrit une seule butée agissant pour limiter la course axiale dans la direction de la partie mobile (1) vers la partie statorique (2), mais aucune butée dans la direction opposée.

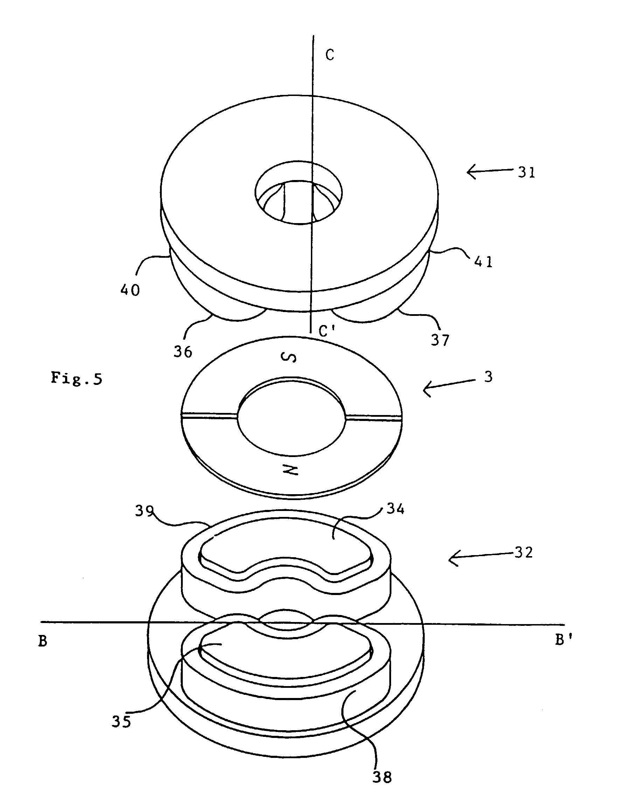

La figure 5 représente un deuxième mode de réalisation de l'actionneur dans la configuration "aimant disque".

Dans ce mode de réalisation, l'aimant disque (3) n'est pas solidaire d'une culasse, mais seulement d'une pièce de liaison avec un axe non représenté sur cette figure.

La partie fixe comporte deux parties statoriques (31, 32) disposées de part et d'autre de l'aimant (3). Chacune des parties statoriques (31, 32) comporte deux épanouissements polaires respectivement (34, 35) et (36, 37). Chacun des épanouissements polaires (34 à 37) est excité par une bobine (38 à 41). Les deux parties statoriques (31, 32) sont décalées angulairement de manière à ce que leurs plans de symétries BB' et CC' forment entre-eux un angle de 90°.

Dans ce mode de réalisation, les épanouissements polaires peuvent s'étendre sur un angle supérieur à 90°.

La distance d comprise entre les extrémités de deux épanouissements consécutifs peut ainsi être réduite à 0, voire être d'un signe négatif. De préférence, les épanouissements polaires (35 à 37) s'étendent sur la plus grande ouverture angulaire possible, et laissant subsister un espace minimum pour le passage des bobines.

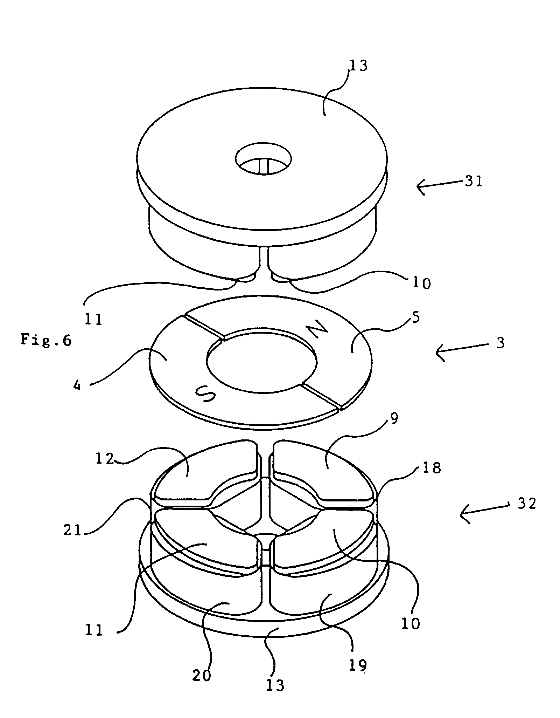

La figure 6 représente une autre mode de réalisation d'un actionneur à aimant disque. Les deux parties statoriques (31, 32) sont symétriques par rapport au plan de l'aimant mince (3), et comportent chacune quatre épanouissements polaires (9 à 12). Les épanouissements polaires de l'une des parties polaire (32) sont excités par des bobines électriques (18 à 21), les épanouissements de l'autre partie statorique (31) pouvant être excités ou non.

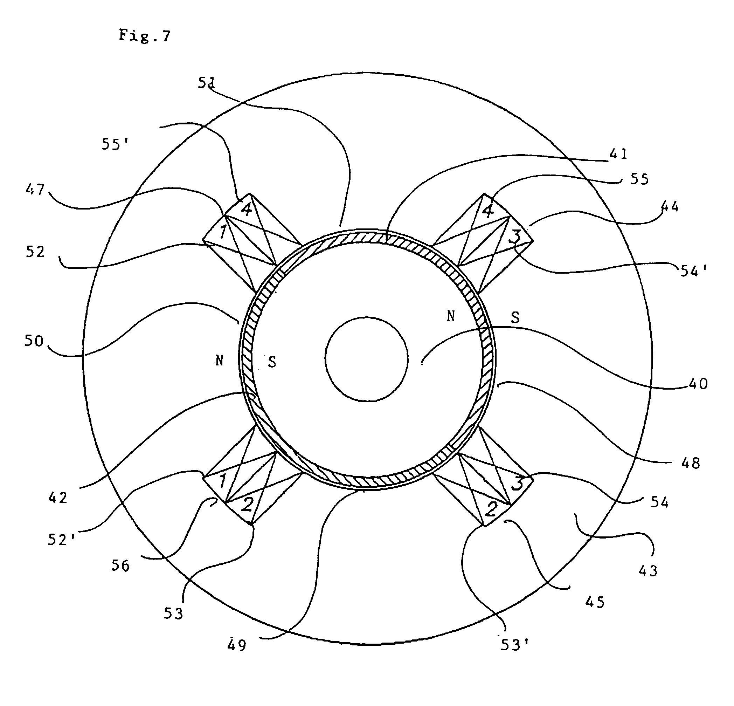

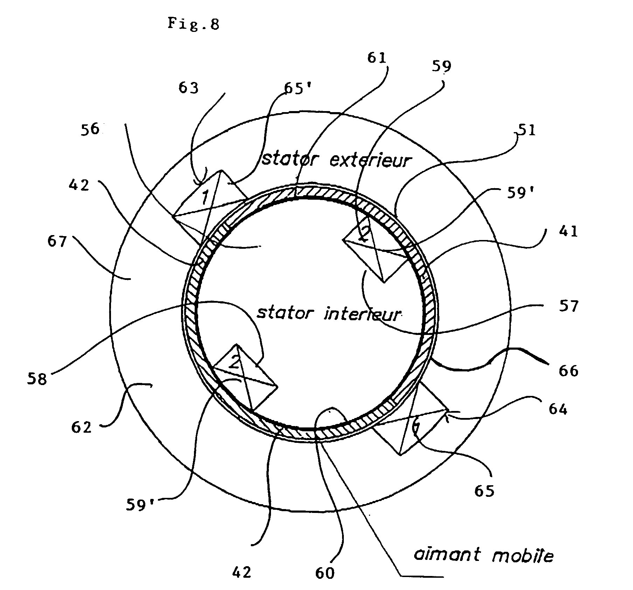

Les figures 7 et 8 représentent deux formes de réalisation de la variante d'actionneur à aimant tubulaire.

la figure 7 représente une forme de réalisation dans laquelle la partie statorique comporte une pièce cylindrique intérieure (40), solidaire de l'aimant tubulaire formé de deux paires de pôles (41, 42) en forme de tuiles s'étendant sur environ 180°, aimantées chacune radialement en sens opposées. Il est également possible de prévoir une pièce cylindrique intérieure non solidaire de l'aimant tubulaire.

La partie statorique extérieure (43) est constituée par une pièce cylindrique présentant quatre rainures (44 à 47) définissant entre elles les quatre épanouissements polaires (48 à 51). Chacun des épanouissements (48 à 51) est entouré par une bobine en forme de cadre (52 à 55).

Pour les actionneurs selon la variante tubulaire, les dimensions P et d sont mesurées sur la surface interne des épanouissements polaires.

Les séquences d'alimentations sont décrites ci-après avec la convention selon laquelle le rotor est représenté sur la figure 7 en position -45°.

| Position du rotor en fin de course | Bobine 1 | Bobine 2 | Bobine 3 | Bobine 4 |
|---|---|---|---|---|
| -45° | + | + | - | - |
| -135° | + | - | - | + |
| +135° | - | - | + | + |
| +45° | - | + | - | + |

La figure 8 représente un autre mode de réalisation d'un actionneur à structure tubulaire.

La partie statorique comporte une pièce intérieure (56) de forme cylindrique présentant deux rainures (57, 58) diamétralement opposés. Une bobine cadre (59) entoure la partie statorique intérieure (56) et vient se loger dans les deux rainures (57, 58). Les deux rainures (57, 58) définissent entre elles les deux premiers épanouissements (60, 61). La deuxième partie statorique est constituée par une pièce tubulaire (62) présentant également deux rainures (63, 64) décalées de 90° par rapport aux deux rainures (58, 59) de la pièce intérieure (56). Les deux autres épanouissements (66, 67) sont formés entre ces deux rainures (63, 64). Une deuxième bobine électrique (65) est logée dans ces rainures (63, 64). Ces rainures sont formées sur l'exemple décrit sur la surface intérieure de la pièce tubulaire (62).

## Revendications

1. Actionneur électromagnétique présentant quatre positions stables en l'absence de courant et un déplacement rapide entre ces positions stables sous l'action d'un courant, pour l'entraînement d'un dispositif tel qu'une vanne ou un interrupteur, l'actionneur comportant un aimant mince (3) mobile en rotation présentant deux paires de pôles magnétiques aimantés transversalement en sens alternés, et une structure statorique comportant quatre épanouissements polaires (9 à 12, 34 à 37, 48 à 51) caractérisé en ce que la structure statorique est configurée de manière à assurer un verrouillage magnétique dans chacune desdites quatre positions stables.

2. Actionneur électromagnétique selon la revendication 1 caractérisé en ce que la structure statorique comporte quatre épanouissements polaires (9 à 12, 34 à 37, 48 à 51) de longueur développée P munis chacun d'une bobine d'excitation, deux pôles consécutifs de l'aimant mince (3) étant séparés par une distance d, l'aimant mince (3) étant mobile dans un entrefer d'une dimension E, les rapports de dimension P/E et P/d étant chacun supérieurs à 8.

3. Actionneur électromagnétique selon la revendication 2 caractérisé en ce que la partie mobile est constituée par une culasse à section circulaire solidaire d'un aimant mince (3) en forme de disque présentant deux secteurs complémentaires (4, 5) s'étendant sur environ 180 ° aimantés en suivant deux directions axiales opposées, les épanouissements polaires (9 à 12) de la partie statorique disposés en regard de l'aimant mobile (3) présentant une forme annulaire s'étendant sur environ 90°.

4. Actionneur électromagnétique selon la revendication 1 ou 3 caractérisé en ce que la surface semi-annulaire des épanouissements polaires (9 à 12) de la partie statorique est prolongée par un pied de section plus réduite, la bobine d'excitation entourant ledit pied.

5. Actionneur électromagnétique selon la revendication 1 à 4 caractérisé en ce que les épanouissements (9 à 12) sont solidaires d'une pièce (13) de fermeture de flux magnétique en forme de disque.

6. Actionneur électromagnétique selon l'une quelconque des revendications 1 à 5 caractérisé en ce que une première paire de deux bobines opposées est alimentée par un courant constant, et l'autre partie de bobines opposées est alimentée par un courant dont le sens peut être alterné.

7. Actionneur électromagnétique selon la revendication 1 ou 2 caractérisé en ce que la structure statorique est constituée par une première pièce ferromagnétique présentant deux épanouissements polaires et une deuxième pièce ferromagnétique présentant deux épanouissements polaires, les deux pièces statoriques étant disposées de part et d'autre de l'aimant mince (3) en forme de disque, les plans passant par la surface supérieure des épanouissements étant écartés d'une distance E, les deux pièces statoriques étant décalées de 90°.

8. Actionneur électromagnétique selon la revendication 1 ou 2 caractérisé en ce que la partie mobile est constituée par une culasse de forme cylindrique et par un aimant mince (3) en forme de cylindre présentant deux secteurs complémentaires en forme de tuile s'étendant sur environ 180° aimantés suivant deux directions radiales opposées.

9. Actionneur électromagnétique selon la revendication 1, 2 ou 8 caractérisé en ce que la partie statorique est formée par une pièce intérieure de forme cylindrique en un matériau ferromagnétique, présentant deux encoches latérales diamétralement opposées pour le positionnement d'une bobine électrique et par une pièce périphérique de forme tubulaire présentant deux rainures longitudinales intérieures pour le positionnement d'une seconde bobine électrique, les plans médians des deux bobines étant perpendiculaires.

10. Actionneur électromagnétique selon la revendication 1, 2 ou 9 caractérisé en ce que la partie statorique est formée par une pièce intérieure de forme cylindrique en un matériau ferromagnétique et par une pièce périphérique de forme tubulaire présentant quatre rainures longitudinales intérieures pour le positionnement de quatre bobines électriques, les plans médians des deux paires de bobines étant décalées angulairement de 90°.

## Patentansprüche

1. Elektromagnetisches Wirkglied mit vier festen Positionen, wenn kein Strom vorhanden ist, und einer schnellen Verschiebung zwischen diesen festen Positionen unter der Einwirkung eines Stroms, für den Antrieb einer Vorrichtung wie beispielsweise eines Ventils oder eines Schalters, wobei das Wirkglied einen dünnen, rotationsmobilen Magneten (3) mit zwei in abwechselnder Richtung quer magnetisierten Magnetpolpaaren umfasst, und mit einer Statorstruktur mit vier Polausbauchungen (9 bis 12, 34 bis 37, 48 bis 51), dadurch gekennzeichnet, dass die Statorstruktur so ausgebildet ist, dass sie in jeder der besagten vier festen Positionen eine magnetische Verriegelung gewährleistet.

2. Elektromagnetisches Wirkglied nach Anspruch 1, dadurch gekennzeichnet, dass die Statorstruktur vier Polausbauchungen (9 bis 12, 34 bis 37, 48 bis 51) von einer entwickelten Länge P umfasst, die jeweils eine Erregerspule aufweisen, wobei zwei aufeinanderfolgende Pole des dünnen Magneten (3) von einem Abstand d getrennt sind, wobei der dünne Magnet (3) in einem Luftspalt von einer Grösse E mobil ist, wobei die Abmessungsverhältnisse P/E und P/d jeweils grösser als 8 sind.

3. Elektromagnetisches Wirkglied nach Anspruch 2, dadurch gekennzeichnet, dass der mobile Teil aus einem Poljoch mit kreisförmigem Querschnitt besteht, das mit einem dünnen, scheibenförmigen Magneten (3) ein Stück bildet, der zwei sich ergänzende Abschnitte (4, 5) aufweist, die sich über etwa 180° erstrecken und nach zwei sich gegenüberliegenden axialen Richtungen magnetisiert sind, wobei die gegenüber dem mobilen Magneten (3) angeordneten Polausbauchungen (9 bis 12) des Statorteils eine ringförmige Form aufweisen, die sich über etwa 90° erstreckt.

4. Elektromagnetisches Wirkglied nach Anspruch 1 oder 3, dadurch gekennzeichnet, das die halbringförmige Oberfläche der Polausbauchungen (9 bis 12) des Statorteils von einem Fuss kleineren Querschnitts verlängert wird, wobei die Erregerspule den besagten Fuss umgibt.

5. Elektromagnetisches Wirkglied nach Anspruch 1 bis 4, dadurch gekennzeichnet, dass die Ausbauchungen (9 bis 12) mit einem scheibenförmigen Magnetfluss-Verschlussteil (13) ein Stück bilden.

6. Elektromagnetisches Wirkglied nach einem der Ansprüche 1 bis 5, dadurch gekennzeichnet, dass ein erstes Paar von sich gegenüberliegenden Spulen von einem konstanten Strom versorgt wird, und der andere Teil der sich gegenüberliegenden Spulen von einem Strom versorgt wird, dessen Richtung abwechselnd sein kann.

7. Elektromagnetisches Wirkglied nach Anspruch 1 oder 2, dadurch gekennzeichnet, dass die Statorstruktur aus einem ersten ferromagnetischen Teil mit zwei Polausbauchungen und einem zweiten ferromagnetischen Teil mit zwei Polausbauchungen besteht, wobei die beiden Statorteile auf beiden Seiten des dünnen, scheibenförmigen Magnets (3) angeordnet sind, wobei die die sich über die obere Fläche der Ausbauchungen erstreckenden Ebenen einen Abstand E aufweisen und die beiden Statorteile um 90° versetzt sind.

8. Elektromagnetisches Wirkglied nach Anspruch 1 oder 2, dadurch gekennzeichnet, dass der mobile Teil aus einem zylinderförmigen Poljoch und einem dünnen, zylinderförmigen Magneten (3) besteht, der zwei sich ergänzende, ziegelförmige Abschnitte aufweist, die sich über etwa 180° nach zwei radialen gegenüberliegenden, magnetisierten Richtungen erstrecken.

9. Elektromagnetisches Wirkglied nach Anspruch 1, 2 oder 8, dadurch gekennzeichnet, dass der Statorteil aus einem zylinderförmigen Innenteil aus ferromagnetischem Material besteht, das zwei seitliche diametrisch gegenüberliegende Nuten für die Positionierung einer Stromspule aufweist, und aus einem periphären, rohrförmigen Teil mit zwei internen Längskerben für die Positionierung einer zweiten Stromspule, wobei die mittleren Ebenen der beiden Spulen lotrecht verlaufen.

10. Elektromagnetisches Wirkglied nach Anspruch 1, 2 oder 9, dadurch gekennzeichnet, dass der Statorteil aus einem zylinderförmigen Innenteil aus ferromagnetischem Material und aus einem periphären, rohrförmigen Teil mit vier internen Längskerben für die Positionierung von vier Stromspulen besteht, wobei die mittleren Ebenen der beiden Spulenpaare in einem Winkel von 90° versetzt sind.

## Claims

1. Electromagnetic actuator with four stable positions if there is zero current and fast movement between these stable positions under the action of a power supply, to drive a device such as a valve or a switch, the actuator comprising a thin magnet (3) mobile in rotation with two pairs of magnetic poles magnetized transversely in alternate directions, and a stator structure comprising four polar lobes (9 to 12, 34 to 37, 48 to 51) characterized in that the stator structure is configured to produce magnetic locking in each of the four said stable positions.

2. Electromagnetic actuator according to claim 1, characterized in that the stator structure has four polar lobes (9 to 12, 34 to 37, 48 to 51) with a developed length P, each fitted with an excitation coil, two consecutive poles of the thin magnet (3) being separated by a distance d, the thin magnet (3) being mobile in an air gap with a dimension E, the ratios of the dimensions P/E and P/d each being greater than 8.

3. Electromagnetic actuator according to claim 2, characterized in that the mobile part consists of a yoke with a circular section fixed to a thin disk-shaped magnet (3) with two complementary sectors (4, 5) extending over about 180° magnetized along two opposite axial directions, the polar lobes (9 to 12) of the stator part placed facing the mobile magnet (3) in the form of an annulus extending over about 90°.

4. Electromagnetic actuator according to claim 1 or 3, characterized in that the semi-annular surface of polar lobes (9 to 12) on the stator part is extended by a downstand with a smaller section, the excitation coil surrounding the said downstand.

5. Electromagnetic actuator according to claims 1 to 4, characterized in that the lobes (9 to 12) are fixed to a part (13) closing the magnetic flux in the shape of a disk.

6. Electromagnetic actuator according to any one of claims 1 to 5, characterized in that a first pair of the two opposite coils is powered by a constant current, and the other part of opposite coils is powered by a current, the direction of which may be alternated.

7. Electromagnetic actuator according to claim 1 or 2, characterized in that the stator structure is composed of a first ferromagnetic part with two polar lobes and a second ferromagnetic part with two polar lobes, the two stator parts being located on each side of the thin disk-shaped magnet (3), the planes passing through the upper surface of the lobes being separated by a distance E, the two stator parts being offset by 90°.

8. Electromagnetic actuator according to claim 1 or 2, characterized in that the mobile part is composed of a cylindrical yoke and a thin cylindrical magnet (3) with two complementary tile-shaped sectors extending over about 180° magnetized along two opposite radial directions.

9. Electromagnetic actuator according to claim 1, 2 or 8, characterized in that the stator part is formed by an inner cylindrical part made of a ferromagnetic material with two diametrically opposed side notches for positioning of an electrical coil, and by a tubular peripheral part with two inner longitudinal grooves for positioning a second electrical coil, the median planes of the two coils being perpendicular.

10. Electromagnetic actuator according to claim 1, 2 or 9, characterized in that the stator part is formed by an inner cylindrical part made of a ferromagnetic material and by a peripheral tubular part with four inner longitudinal grooves for positioning four electrical coils, the median planes of the two pairs of coils being offset by an angle of 90°.
